# EUROPEAN PATENT APPLICATION

(11) **EP 1 591 717 A2**
(43) Date of publication of application: **02.11.2005**
(21) Application number: 05008055.5
(22) Date of filing: 13.04.2005
(51) Int. Cl.: F21S 10/04, F21V 8/00

(54) **Device for supporting and lighting votive candles**

(30) Priority: 26.04.2004 IT MI20040817
(71) Applicant: Dell'Aquila, Luca, 26855 Lodi Vecchio (LODI) (IT); Galvan, Mauro, 20070 Cerro al Lambro (Milano) (IT)
(72) Inventor: Dell'Aquila, Luca, 26855 Lodi Vecchio (LODI) (IT); Galvan, Mauro, 20070 Cerro al Lambro (Milano) (IT)
(74) Representative: Cicogna, Franco

(57) **Abstract**

The present invention relates to a device for supporting and lighting votive candles, comprising a box-like body (2) defining, at the top thereof, a plurality of recesses (3) for housing candle elements (4) therein, in the box-like body being arranged at least a light source (5), and the candle elements (4) comprising a light conveyor element, adapted to simulate the lighting of the candle element as the latter is engaged in the box-like body (2).

## Description

### BACKGROUND OF THE INVENTION

The present invention relates to a device for supporting and lighting votive candles.

As is known, prior votive candles comprised tallow candles, which were lighted on a candle rack, designed for properly receiving said candles.

The above approach, however, has been progressively abandoned because of an intrinsic risk caused by the candle flame which, in a lot of cases, generated fires and which, anyhow, represented a serious danger source.

Electric candle have been accordingly constructed, comprising a supporting body defining a plurality of seats or recesses allowing an electric connection with a candle element.

Said candle element, as it is engaged in its receiving recess, would close an electric contact with a corresponding lighting assembly.

While this approach is of safe operation, since it does not provide a real flame, and since a low voltage is used, it is however affected by great constructional problems, since it has a very complex design, in particular with respect to its means for providing an electric connection of all the candle element recesses.

Moreover, each candle element comprises a body having a lamp and electric connections to be contacted with the recess corresponding connections.

### SUMMARY OF THE INVENTION

Accordingly, the aim of the present invention is to overcome the above mentioned drawbacks, by providing a device for supporting and lighting votive candles which, in addition to assuring a greatly safe operation, because of a lacking of exposed flames, can also be made in a very simple manner, without the provision of complex electric contacts.

Within the scope of the above mentioned aim, a main object of the present invention is to provide a device for supporting and lighting votive candles, which allows to perfectly simulate the lighting of a candle as the latter is arranged on its support.

Yet another object of the present invention is to provide such a votive candle supporting and lighting device which, owing to its specifically designed constructional features, is very reliable and safe in operation.

Yet another object of the present invention is to provide such a votive candle supporting and lighting device which can be easily made and which, moreover, is very competitive from a mere economic standpoint.

According to one aspect of the present invention, the above mentioned aim and objects, as well as yet other objects, which will become more apparent hereinafter, are achieved by a device for supporting and lighting votive candles, said device having a box body defining, at a top thereof, a plurality of candle element housing recesses, in said box body being provided at least a light source, and said candle elements comprising a light conveyor element adapted to simulate the lighting of said candle element as said candle element is engaged in said box body.

### BRIEF DESCRIPTION OF THE DRAWINGS

Further characteristics and advantages of the present invention will become more apparent hereinafter from the following detailed disclosure of a preferred, though not exclusive, embodiment of a device for supporting and lighting votive candles, which is illustrated, by way of an indicative, but not limitative, example in the figures of the accompanying drawings, where:
Figure 1 is a schematic perspective view illustrating the device for supporting and lighting votive candles according to the present invention;
Figure 2 is a further perspective view illustrating the box-like body to which some votive candles have been applied;
Figure 3 is a detail view showing a detail of a recess or connection seat for connecting said candle element; and
Figure 4 is a schematic view showing the engagement of a candle element and further showing diaphragm elements for preventing the light passage.

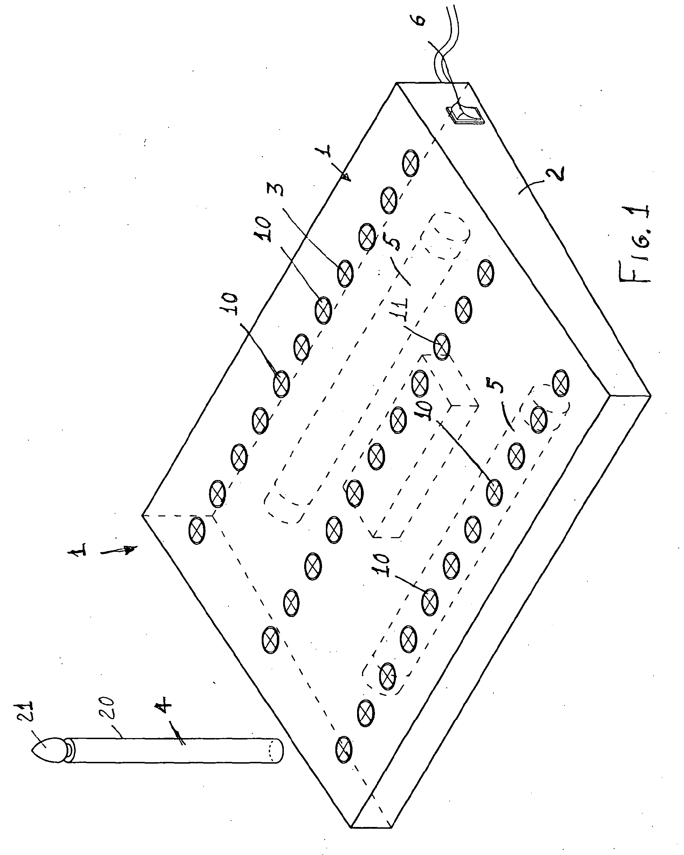

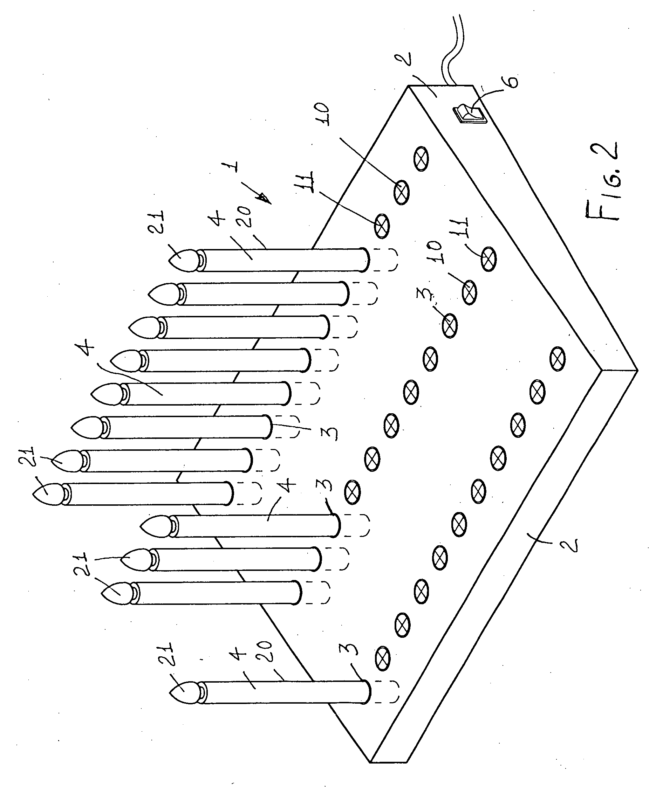

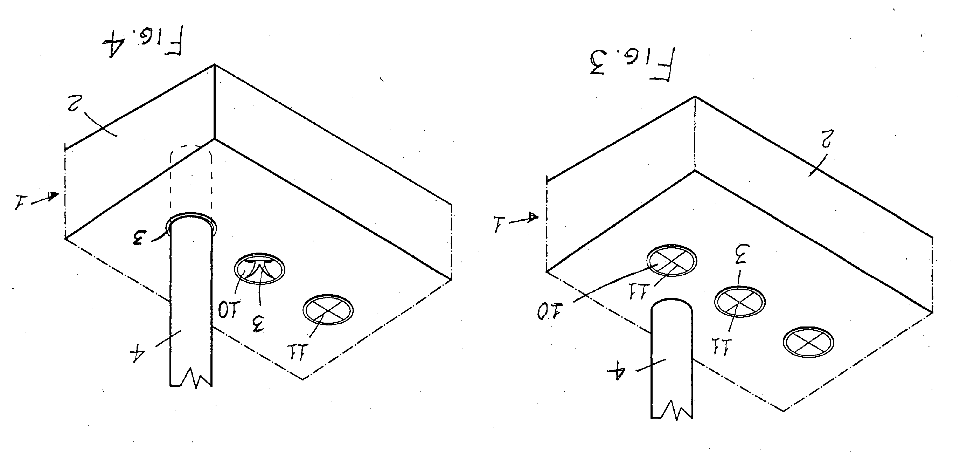

### DESCRIPTION OF THE PREFERRED EMBODIMENT

With reference to the number references of the above mentioned figures, the device for supporting and lighting votive candles, according to the invention, which has been generally indicated by the reference number 1, comprises a box-like body 2 having a top face including a plurality of recesses or seats 3 for housing candle elements therein, which candle elements have been generally indicated by the reference number 4 and will be disclosed in a more detailed manner hereinafter.

Inside said box-like body 2 is provided a lighting source, which advantageously comprises fluorescent tubes 5 or any other desired types of lighting elements, and which, advantageously, is of the type not generating heat.

On the box-like body is moreover provided a control switch 6 for switching on and off the power supply.

The main feature of the present invention is that each said recess or seat 3 is closed, at a top thereof, by a diaphragm element 10, comprising a rubber or the like material membrane and having a cross-shape cut or notch 11.

Said membrane, under normal conditions, will hold the recess in a closed condition, thereby preventing light from exiting to the outside environment, while allowing the candle element 4 to be easily engaged.

Said candle element 4, in particular, is made of a light transmitting material, such as plexiglass or other like materials, and is coated by an opaque coating 20 affecting the box-like body, whereas the top portion thereof 21, which is of flame configuration, is optically transparent, thereby operating as an element which is illuminated when the candle element 4 is engaged in its recess 3.

Advantageously, the bottom 22 of the candle element is unobstructed or free, thereby allowing light to be easily conveyed toward the flame shape terminal portion 21.

Advantageously, the coating 20 which has an opaque outside, can be provided with reflecting inside, thereby facilitating the transmission of light toward the flame element 21.

Likewise, the inner part of the box-like body can be made of a light reflecting material, thereby increasing the light amount which is conveyed or transmitted to the outside,

In actual practice, the box-like body, with the candle elements not engaged therein, will be opaque and unilluminated, even if the light source 5 is switched on.

Vice versa, as a candle element is engaged in its recess 3, it will convey toward the outside the emitted light thereby simulating a lighting of its end portion, comprising the flame-shape element.

Thus, it would be possible to provide a candle element rack, the candle elements of which are lightened as they are engaged in the box-like body, without providing any specifically designed electric connections.

From the above disclosure it should be apparent that the invention fully achieves the intended aim and objects.

In particular, the fact is to be pointed out that the invention provides a device for supporting and lighting votive candles, which is very simple construction-wise, and, moreover, is inherently safe.

Moreover, it has the advantage of perfectly simulating the lighting of each candle element, without the provision of any specifically designed electric contacts.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes, can be any depending on requirements.

## Claims

1. A device for supporting and lighting votive candles, said device having a box body defining, at a top thereof, a plurality of candle element housing recesses, in said box body being provided at least a light source, and said candle elements comprising a light conveyor element adapted to simulate the lighting of said candle element as said candle element is engaged in said box body.

2. A device, according to the preceding claim, **characterized in that** said recesses are closed, at a top portion thereof, by a diaphragm element, which can be opened as a said candle element is engaged in a said recess.

3. A device, according to one or more of the preceding claims, **characterized in that** said diaphragm element comprises a resilient membrane separated by a cross-shape notch.

4. A device, according to one or more of the preceding claims, **characterized in that** said light conveyor element comprises a plexiglass body.

5. A device, according to one or more of the preceding claims, **characterized in that** said candle elements comprise, at a body thereof, an opaque coating and have a top free end portions of flame shape and optically transparent, for emitting light, and simulating the lighting of the flame.

6. A device, according to one or more of the preceding claims, **characterized in that** said opaque coating comprises an inner light reflecting layer for enhancing the light transmission.

7. A device, according to one or more of the preceding claims, **characterized in that** said light source is of a cold light type.

8. A device for supporting and lighting votive candles, according to one or more of the preceding claims, and as substantially broadly disclosed and illustrated, for the intended aim and objects.
